Europäisches Patentamt

European Patent Office

Office européen des brevets

(19)

(11) Veröffentlichungsnummer: **0 380 916**
**A1**

(12) **EUROPÄISCHE PATENTANMELDUNG**

(21) Anmeldenummer: 90100203.0

(22) Anmeldetag: 05.01.90

(51) Int. Cl.⁵: **F16B 13/04, F16B 13/00**

(30) Priorität: 01.02.89 DE 8901067 U

(43) Veröffentlichungstag der Anmeldung:
08.08.90 Patentblatt 90/32

(84) Benannte Vertragsstaaten:
AT BE CH DE DK ES FR GB IT LI NL

(71) Anmelder: fischerwerke Artur Fischer GmbH
& Co. KG
Weinhalde 14 - 18
D-7244 Waldachtal 3/Tumlingen(DE)

(72) Erfinder: Mayer, Burkhard
Altdorfer Strasse 37
D-7038 Holzgerlingen(DE)

(54) Hohlplattendübel.

(57) Es sind Befestigungselemente bekannt, die für den Einsatz in mit einer Hinterschneidung versehenen Bohrlöchern vorgesehen sind, wobei bei diesen ein Konusbolzen mit der Hülse in das Bohrloch eingeschlagen wird und der Konusbolzen bei Verschraubung mit dem an der Bohrlochöffnung zu befestigenden Gegenstand in die Hülse zurückgeführt wird, wodurch der Spreizbereich der Hülse aufgeweitet wird.

Es wird ein Hohlplattendübel vorgeschlagen, bei dem über den Bolzen (1) eine Drehsicherung (4) auf die Hülse (5) aufgeschraubt wird. Hierdurch wird der Dübel während des Montagevorganges gegen ein Herausfallen gesichert.

Fig.1

EP 0 380 916 A1

# Hohlplattendübel

Die Erfindung betrifft einen Hohlplattendübel gemäß der Gattung des Hauptanspruches.

Es sind Befestigungselemente bekannt, die für den Einsatz in Bohrlöchern eines Mauerwerks vorgesehen sind, die eine konusförmige Hinterschneidung aufweisen. Die formschlüssige Verankerung dieser Befestigungselemente wird dadurch bewirkt, daß ein Konusbolzen mit der Hülse in das Bohrloch eingeschlagen wird und die Hülse bei Auftreffen des Konusbolzens auf den Bohrlochgrund mit ihrem Spreizbereich sich im Bereich des am Bolzen befindlichen Konuses aufspreizt und teilweise über den Konus in das Bohrloch eingeschlagen wird. Durch eine Verschraubung mit dem an der Bohrlochöffnung zu befestigenden Gegenstand wird der Konusbolzen schließlich so weit in der Hülse zurückgeführt bis eine mit dem hinterschnittenen Bohrloch formschlüssige Aufspreizung der Hülse in deren Spreizbereich erreicht ist.

Nachteilig erweist sich bei dieser Art der Verankerung von Befestigungselementen, daß insbesondere zwischen der im Rahmen der Montage erfolgenden Phase des vollkommenen Einschlagens der Hülse und der Phase ihrer Verspreizung durch eine mit einem Drehschraüber aufgedrehte Mutter eine Sicherungsvorrichtung gegen das Herausfallen des Befestigungselementes nicht gegeben ist. Dies erweist sich jedoch insbesondere bei vertikal verlaufenden Bohrlöchern in Decken usw. als erforderlich. Auch besteht bei einem nicht völlig in das Bohrloch eingeschlagenen Befestigungselement die Gefahr einer freistehenden Montage bei der der zu befestigende Gegenstand nicht bündig an der Wand oder Decke anliegt. Schließlich besteht bei der Verankerung eines so beschaffenen Befestigungselements bei der Verankerung in einem mit Hohlräumen versehenen Wand- oder Deckenbereich die Gefahr, daß der Konusbolzen nicht auf einen Bohrlochgrund trifft und dadurch beim Schraubvorgang sich der Bolzen mitdreht, somit eine formschlüssige Aufspreizung im Bohrloch nicht gewählteistet ist.

Der Erfindung liegt die Aufgabe zugrunde, einen Hohlplattendübel zu schaffen, der einfach zu montieren ist und eine Sicherung gegen ein Herausfallen des Dübels während des Montagevorganges aufweist.

Die Lösung dieser Aufgabe wird durch die im Hauptanspruch angegebenen Merkmale erhalten. Die über den Konusbolzen auf eine Stirnseite der Hülse aufschraubbare Drehsicherung stellt sicher, daß der Dübel unabhängig davon, ob sich die Befestigung in einem Hohlraumbereich oder in einem Stegbereich befindet verankert werden kann. Ein Mitdrehen des in der mit einem Spreizbereich versehenen Hülse versehenen Bolzens während des im Rahmen der Montage erfolgenden Verschraubvorganges wird dadurch ausgeschlossen. Die länglichen, an der Außenfläche des röhrenförmigen Teils der Drehsicherung befindlichen Längsrippen sichern dabei die Hülse vor einem, während des Verschraubvorganges, möglichen Mitdrehen.

Der Hohlplattendübel besteht vorzugsweise aus elastischem Kunststoff, wodurch während des Einschlagvorganges ein Toleranzausgleich erreicht wird. Hierbei trägt zur Vermeidung einer freistehenden Montage insbesondere bei, daß die Drehsicherung aufgrund ihrer Beschaffenheit während des Einschlagens teilweise gequetscht wird. Der mit dem im Bereich der Bohrlochöffnung befindlichen Untergrund bündige Abschluß der Drehsicherung wird auch dadurch begünstigt, daß der röhrenförmige Teil lediglich in seinem mittigen Bereich einen geringeren Durchmesser der Bohrung aufweist, d.h. in diesem Bereich die Röhrenwand verstärkt ist. Eine leichte Verquetschung an den Abschlußrändern des röhrenförmigen Teils wird dadurch ermöglicht.

Die Gefahr einer Lösung des Dübels aus der Wand- bzw. Deckenbohrung vor der, während der Montage erfolgenden formschlüssigen Verspreizung des Spreizbereiches im Bohrloch ist ebenfalls durch die Drehsicherung des Konusbolzens beseitigt.

Die Erfindung wird anhand der Zeichnung näher erläutert.

Es zeigen:

Figur 1 einen Hohlplattendübel in montiertem Zustand, zum Teil im Querschnitt, einem Bohrloch mit Hinterschneidung einliegend,

Figur 2 einen erfindungsgemäßen Hohlplattendübel in montiertem Zustand am Bohrlochgrund auf einen Hohlraumbereich treffend und

Figur 3 eine Seitenansicht der Drehsicherung im Querschnitt.

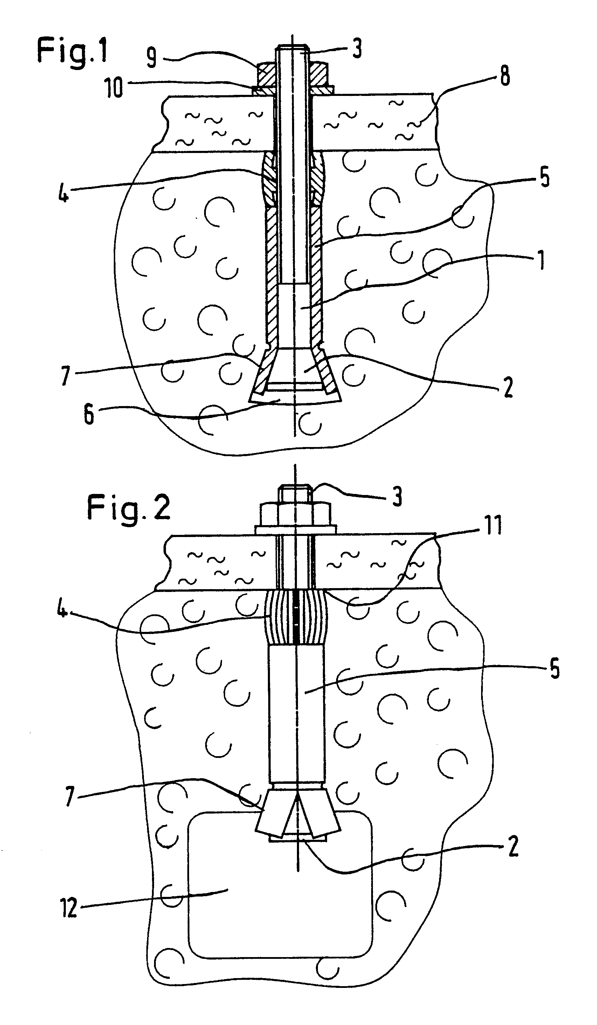

Der in Figur 1 dargestellte Hohlplattendübel besteht aus einem Bolzen 1 an dessen Ende ein Konus 2 ausgebildet ist. In seinem oberen Bereich weist der Bolzen 1 ein Außengewinde 3 auf. Während der Montage wird die mit Längsrippen versehene Drehsicherung über den mit einem Außengewinde ausgestatteten Bereich des Bolzens 1 auf die zylindrische Hülse 5 des Dübels aufgeschraubt. Der so beschaffene Hohlplattendübel wird in ein vorgebohrtes, mit einer Hinterschneidung versehenes Bohrloch 6 mittels eines Hammers eingeschlagen. Bei Auftreffen des Konus 2 auf den Bohrlochgrund wird durch weitere Schlagbewegungen die Hülse in ihrem Spreizbereich 7 über den Konus 2 des Bolzens 1 gespreizt. Durch Anbringen des zu befestigenden Gegenstandes 8 und dessen Befestigung mittels einer Mutter 9 und einem Anschlagring 10 wird über einen an der Mutter 9 ansetzenden Drehschrauber oder Steckschlüssel im Wege des Eindrehens der Spreizbereich 7 formschlüssig im hinterschnittenen Bohrloch 6 aufgespreizt. Die Drehsicherung 4 verhindert während der Montage ein Mitdrehen mit dem Bolzen 1, da die Drehsicherung 4 ein Innengewinde aufweist, das in das Außengewinde 3 des Bolzens 1 greift.

Der in Figur 2 dargestellte Hohlplattendübel zeigt den mit einem Außengewinde 3 versehenen und vollständig in den Spreizbereich 7 eingezogenen Bolzen mit daran befindlichem Konus. Die Drehsicherung 4 wurde während des Montagevorganges mit dem das Bohrloch 11 umgebenden Bereich bündig eingeschlagen. Da vorliegend der in das Bohrloch eingeführte Dübel am Bohrlochgrund auf einen Hohlraumbereich 12 trifft, besteht die Gefahr, daß bei Eindrehen einer Mutter 9 sich der in der Hülse 5 befindliche Bolzen mitdreht, somit eine völlige Aufspreizung des Spreizbereiches 7 verhindert und dadurch eine feste Verankerung gefährdet. Ein Mitdrehen während der Montage wird durch die mit einem Innengewinde versehene Drehsicherung 4 verhindert und somit eine Aufspreizung des Spreizbereiches 7 zur festen Verankerung gewährleistet.

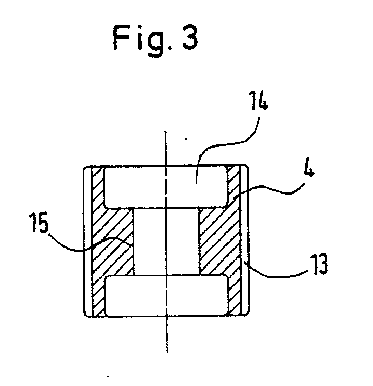

Die in Figur 3 im Querschnitt dargestellte Drehsicherung 4 weist an ihrer Außenfläche Längsrippen 13 auf, die eine feste Verankerung der Drehsicherung im Bohrloch bewirken. Die Bohrung 14 des röhrenförmigen Teils der Drehsicherung 4 weist in ihrem mittigen Bereich einen geringeren Durchmesser auf. In diesem Bereich ist die Drehsicherung mit einem Innengewinde 15 ausgestattet, das ein Aufschrauben der Drehsicherung 4 über den mit einem Außengewinde versehenen Bolzen ermöglicht.

## Ansprüche

1. Hohlplattendübel mit einer zylindrischen Hülse zur Aufnahme eines teilweise mit einem Außengewinde versehenen Bolzens, an dessen Stirnseite ein Konus ausgebildet ist, und mit einem an einer Seite der Hülse aufspreizbaren Spreizbereich, **dadurch gekennzeichnet,** daß über den Bolzen (1) eine Drehsicherung (4) auf die dem Spreizbereich (7) abgelegene Stirnseite der Hülse (5) aufgeschraubt ist.

2. Hohlplattendübel nach Anspruch 1, **dadurch gekennzeichnet,** daß die Drehsicherung (4) aus elastischem Kunststoff hergestellt ist.

3. Hohlplattendübel nach Anspruch 1 oder 2, **dadurch gekennzeichnet,** daß die Drehsicherung (4) aus einem länglichen, röhrenförmigen Teil besteht, an dessen Außenfläche mehrere Längsrippen (13) angeordnet sind.

4. Hohlplattendübel nach Anspruch 3, **dadurch gekennzeichnet,** daß die Bohrung (14) des röhrenförmigen Teils in ihrem mittigen Bereich einen geringeren Durchmesser aufweist als im übrigen Bereich der Bohrung.

5. Hohlplattendübel nach einem der vorhergehenden Ansprüche, **dadurch gekennzeichnet,** daß im Bereich des geringeren Durchmessers der Bohrung (14) des röhrenförmigen Teils ein Innengewinde (15) angeordnet ist.

Fig.1

Fig.2

# Fig. 3

**Europäisches Patentamt**

# EUROPÄISCHER RECHERCHENBERICHT

EP 90100203.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - A1 - 2 947 751</u><br>(MEISINGER KG)<br>* Fig. 1,2 * | 1 | F 16 B 13/04<br>F 16 B 13/00 |
| A | <u>DE - A1 - 2 758 091</u><br>(LIEBIG)<br>* Fig. 1,3; Anspruch 4 * | 1,2 | |
| A | <u>DE - A1 - 3 012 498</u><br>(HILTI AG)<br>* Fig. * | 1 | |

| RECHERCHIERTE SACHGEBIETE (Int. Cl.⁵) |
|---|
| E 04 B   1/00<br>F 16 B   5/00<br>F 16 B 13/00<br>F 16 B 39/00 |

Der vorliegende Recherchenbericht wurde für alle Patentansprüche erstellt.

| Recherchenort | Abschlußdatum der Recherche | Prüfer |
|---|---|---|
| WIEN | 27-02-1990 | RIEMANN |